# EUROPÄISCHE PATENTSCHRIFT

(11) **EP 2 542 102 B1**
(45) Veröffentlichungstag und Bekanntmachung des Hinweises auf die Patenterteilung: **10.05.2017**
(21) Anmeldenummer: 11704208.5
(22) Anmeldetag: 11.02.2011
(51) Int. Cl.: A23L 13/60, A23L 13/40, A23L 13/70, A23B 4/12, A23L 3/015

(54) **VERFAHREN ZUR STEUERUNG DER PRODUKTEIGENSCHAFTEN BEI DER HERSTELLUNG VON LEBENSMITTELN**
METHOD FOR CONTROLLING PRODUCT CHARACTERISTICS IN THE PRODUCTION OF FOODSTUFFS
PROCÉDÉ PERMETTANT DE MODULER LES PROPRIÉTÉS DE PRODUITS LORS DE LA PRODUCTION DE PRODUITS ALIMENTAIRES

(30) Priorität: 04.03.2010 DE 102010010118
(43) Veröffentlichungstag der Anmeldung: 09.01.2013
(73) Patentinhaber: Triton GmbH, 14089 Berlin (DE); Deutsches Institut für Lebensmitteltechnik e.V., 49610 Quakenbrück (DE)
(72) Erfinder: HEINZ, Volker, 49610 Quakenbrück (DE); KORTSCHACK, Fritz, 14089 Berlin (DE); TÖPFL, Stefan, 49080 Osnabrück (DE); HERTEL, Christian, 49610 Quakenbrück (DE)
(74) Vertreter: Kruspig, Volkmar
(86) Internationale Anmeldenummer: PCT/EP2011/052014
(87) Internationale Veröffentlichungsnummer: WO 2011/107335

(56) Entgegenhaltungen:
- EP-A1- 0 668 026
- EP-A1- 0 683 986
- EP-A1- 0 748 592
- WO-A1-2010/026171
- DE-A1-102004 061 187
- DE-A1-102008 004 242
- CREHAN C M ET AL: "Effects of salt level and high hydrostatic pressure processing on frankfurters formulated with 1.5 and 2.5% salt", MEAT SCIENCE, Bd. 55, Nr. 1, Mai 2000 (2000-05), Seiten 123-130, XP002628517, ISSN: 0309-1740
- KRZIKALLA K I ED - KRZIKALLA KATHARINA IRENA: "Hochdruckinduzierte Veränderungen von Lebensmittelinhaltsstoffen, Darstelling der Ergebnisse mit Diskussion", 1. Februar 2008 (2008-02-01), HOCHDRUCKINDUZIERTE VERÄNDERUNGEN VON LEBENSMITTELINHALTSSTOFFEN; [DISSERTATIONEN / BUNDESINSTITUT FÜR RISIKOBEWERTUNG, BFR], BUNDESINSTITUT FÜR RISIKOBEWERTUNG, BERLIN, PAGE(S) 57 - 60, XP002555373, ISBN: 978-3-938163-36-8 das ganze Dokument

## Beschreibung

Die Erfindung betrifft ein Verfahren zur Steuerung der Produkteigenschaften bei der Herstellung von Lebensmitteln, die der Produktgruppe Rohwurst zuzurechnen sind, insbesondere zum Erhalt der Streich- oder Schnittfähigkeit.

Aus der EP 0 944 329 B1 und der DE 196 53 677 C1 ist ein Verfahren zur Herstellung stabiler, in Anwesenheit von Mikroorganismen hergestellter Fleisch- und Wurstwaren vorbekannt.

Aufgabe der dortigen Lehre ist es, ein Verfahren anzugeben, nach dem in einfacher und sicherer Weise Fertigungsschritte der Roh- und Dauerwurstherstellung durchgeführt werden können und mit dem ein qualitativ stabiles Endprodukt entsteht.

Das vorbekannte Verfahren zielt darauf, die vorliegenden Halbfabrikate nach dem Erreichen eines gewünschten und zum Halten dieses End-pH-Wertes mehrere Minuten bei Raumtemperatur einer Hochdruckbehandlung zu unterwerfen und dann in üblicher Weise weiterzuverarbeiten. Durch die Hochdruckbehandlung sollen die Aktivitäten der Mikroflora im Halbfabrikat gezielt unterbrochen werden. Damit finden keine relevanten biochemischen Prozesse mehr statt.

In der europäischen Patentanmeldung EP 0 668 026 A1 wird zur Herstellung von salzarmen und/oder phosphatarmen Würsten eine Rezepturgestaltung offenbart, um die Menge an zur Wasserbindung eingesetzten Salzen und Phosphaten zu minimieren. Das dargestellte Verfahren setzt voraus, dass die benötige Menge nach einer Druckbehandlung von 500 bar bis 4.000 bar anschließend thermisch behandelt wird. Das Ziel dieser Behandlung ist die Rezepturoptimierung.

In dem Artikel "Effects of salt level and high hydrostatic pressure processing on frankfurters formulated with 1.5 and 2.5% salt" von C.M. Crehan wird dargelegt, dass eine Hochdruckbehandlung bei der Herstellung von Frankfurter Würstchen eine Minimierung des Salzgehaltes bewirken kann.

Aus dem Stand der Technik sind des Weiteren Verfahren zur Behandlung von Lebensmitteln, insbesondere zum Haltbarmachen von frischen Wurst- oder Fleischwaren, mittels zeitlich befristeter Einwirkung von Temperatur und/oder Druck oder Hochdruck sowie zum anschließenden Inverkehrbringen der Ware bekannt. In der DE 10 2005 011 868 A1 wird die Ware beispielsweise bereits verpackt dem Behandlungsschritt unterzogen. Für mindestens Teile des Verpackungsmaterials ist eine dehnbare, restelastische oder dauerelastische Eigenschaften aufweisende Folie zu verwenden.

Die Technologie der Kochwurst-Herstellung ist dadurch geprägt, dass die Herstellung, insbesondere von Blutwurstsorten, so heiß wie möglich zu erfolgen hat. Auch das zur Verwendung kommende gewürfelte Fleisch-und/oder Speckmaterial muss kochend heiß abgebrüht sein und wird so heiß wie nur irgend möglich verarbeitet. Von großer Wichtigkeit ist es ebenfalls, dass die Würste während der gesamten Garzeit ohne Temperaturabfall gekocht werden. Ein Abkühlen, z.B. durch Zulaufenlassen von kaltem Wasser, auch bei überhöhter Temperatur, wirkt schockartig auf die Kerntemperatur von insbesondere Blutwürsten und führt im Fertigprodukt zu einem zu weichen Kern mit Rotfärbung der Speckwürfel.

Bei der Herstellung von Rohwurstarten ist hinsichtlich schnittfester als auch streichfähiger Rohwurstsortenware zu unterscheiden. Innerhalb dieser Herstellungsverfahren sind weitere Differenzierungen erforderlich, da beispielsweise auch die Körnung sowohl bei schnittfesten als auch bei streichfähigen Rohwürsten eine spezielle Technologie erfordert.

Grundsätzlich ist das Fleischmaterial für schnittfeste Rohwurst vor der eigentlichen Wurstherstellung tiefzukühlen. Die weitere Behandlung des Fleischmaterials vor der eigentlichen Rohwurstherstellung besteht dann im Zerkleinern der tiefgekühlten Fleischblöcke. Je nach Kuttergröße müssen die gefroreren Stücke etwa Faustgröße haben, damit die Kuttermesser in der Lage sind, das gefrorene Material zu erfassen und zu zerkleinern.

Das Fleisch- und Speckmaterial für die Herstellung streichfähiger Rohwurstsorten soll ebenfalls nur im gut gekühlten Zustand zur Verarbeitung kommen. In der wärmeren Jahreszeit ist es sogar empfehlenswert, das Rohmaterial leicht anzufrieren. Dabei ist auf jeden Fall sicherzustellen, dass das Fleisch nicht bereits im Wolf anfängt zu schmieren, da es unter Umständen mehr gequetscht als geschnitten wird.

Aus dem Vorgenannten ist ersichtlich, dass die Herstellung von Roh- und Kochwurst technologisch sehr aufwendige Schritte erfordert, die nicht ohne weiteres für verschiedene Wurstsorten vereinheitlicht werden können.

Es ist daher Aufgabe der Erfindung, ein weiterentwickeltes Verfahren zur Steuerung der Produkteigenschaften bei der Herstellung von Lebensmitteln, die der Produktgruppe Rohwurst zuzurechnen sind, insbesondere zum Erhalt der Streich- oder Schnittfähigkeit anzugeben, das eine sehr hohe Lebensmittelsicherheit und lang anhaltende gute Qualitäten garantiert. Weiterhin soll die Zartheit der Produkte verbessert und die Verträglichkeit gefördert werden. Das weiterentwickelte Verfahren soll ein Zusatz zum Patent DE 10 2008 048 543 A1 darstellen.

In DE 10 2008 048 543 A1 wird ein Verfahren zur Steuerung der Produkteigenschaften bei der Herstellung von Lebensmitteln, die den Produktgruppen Roh- und Kochwurst, Pasteten, gegarten Fleischwaren oder Ähnlichem zuzurechnen sind, beschrieben. Das darin offenbarte Verfahren dient insbeondere zum Erhalt der Streich- oder Schnittfähigkeit. Bei der Herstellung von Rohwurst wird das übliche Ausgangsmaterial, allerdings im nicht tiefgekühlten Zustand angesalzt, vermischt und grob vorzerkleinert. Es erfolgt dann eine Fermentierung und Absäuerung dieser Mischung. Anschließend wird erfindungsgemäß zur Eiweißkoagulation eine Hochdruckbehandlung durchgeführt, die gleichzeitig zu einer Inaktivierung von Mirkoorganismen führt, wobei die mechanisch gerennten Fleischrohstoffe in ihrer Trennung erhalten bleiben. Im Anschluss erfolgen eine Feinzerkleinerung und ein Abfüllen. Auch in der WO 2010/026171 A1 wird ein derartiges Verfahren offenbart.

Die Lösung der Aufgabe der Erfindung erfolgt gemäß einem Verfahren nach der Lehre des Patentanspruchs 1.

Es wird demnach bei dem Verfahren zur Steuerung der Produkteigenschaften bei der Herstellung von Rohwurst davon ausgegangen, übliche Ausgangsmaterialien zu nutzen, allerdings diese nicht im tiefgekühlten Zustand, sondern bei Raumtemperatur anzusalzen, zu vermischen und grob zu zerkleinern. Diese Mischung wird dann einer Fermentierung und Absäuerung, d.h. einer gezielten pH-Wertsenkung unterzogen.

Anschließend erfolgt erfindungsgemäß eine Hochdruckbehandlung zur Eiweißkoagulation und zur Inaktivierung von Mikroorganismen, wobei die mechanisch getrennten Fleischrohstoffe in ihrer Trennung erhalten bleiben. Weiterhin wird bei Notwendigkeit im Anschluss an diese Behandlungsschritte eine Feinzerkleinerung vorgenommen.

Diese Mischung wird dann einer Hochdruckbehandlung unterzogen, um über die Höhe des Druckes sowie die Behandlungszeit die spätere Konsistenz des Endprodukts über das Maß der erfolgenden Eiweißdenaturierung vorzugeben.

Im Anschluss an diesen Behandlungsschritt wird das Rezepturgemisch auf die Endkörnung zerkleinert und ein Abfüllen in eine Verkaufsumhüllung oder Verpackung vorgenommen. Hieran kann sich eine zweite Hochdruckbehandlung anschließen, so dass insgesamt Fettabsätze im Produkt verhindert sind und die Streichfähigkeit des Produkts erhalten bleibt.

Bei der Herstellung von Rohwurst wird das abgefüllte Produkt anschließend einer weiteren, zweiten Hochdruckbehandlung unterzogen.

Hier wiederum wird die Zugabe von Fett während der Zerkleinerung auf Endkorngröße realisiert, worauf dann im Anschluss die zweite Hochdruckbehandlung vorgenommen wird.

Durch die Hochdruckbehandlung erfolgt eine Eiweißkoagulation, die dazu führt, dass das eingeschlossene Wasser langfristig, auch im erhitzten Zustand, im Produkt verbleibt mit der Folge einer deutlichen Erhöhung des Produktvolumens im Vergleich zu bekannten Produktionsverfahren. Auch lässt sich feststellen, dass das entsprechende Lebensmittel durch die Druckbehandlung zarter geworden ist.

Es hat sich in überraschender Weise gezeigt, dass zur verstärkten Wahrnehmung sensorisch aktivierter Substanzen eine ergänzende, aber auch eine mit den oben genannten Verfahrensschritten kombinierte Hochdruckbehandlung am Halbfertigprodukt, Fertigprodukt oder an Ausgangs- oder geschmacklich relevanten Zusatzstoffen von erheblichem Vorteil ist.

Durch die verstärkte Wahrnehmung zugegebenen Salzes ergibt sich erfindungsgemäß die Möglichkeit, den Salzgehalt insgesamt zu reduzieren mit der Folge einer besseren und gesundheitsfördernden Verträglichkeit des Endprodukts.

Die Erfindung soll nachstehend anhand von Ausführungsbeispielen näher erläutert werden.

Ein Grundgedanke der Erfindung besteht, wie bereits weiter oben geschildert, in der langfristigen Erhaltung der Streichfähigkeit des Fertigprodukts durch eine spezielle Hochdruckbehandlung des noch auf Endkorngröße zu zerkleinernden Rohmaterials bzw. Rohmaterialgemisches.

Bei der Herstellung von streichfähiger Rohwurst wird das Rohmaterial grob vorzerkleinert, mit Salz und Gewürzen sowie eventuellen Starterkulturen versehen.

Im Nachgang erfolgt die gewünschte Umrötung, Absäuerung und Fermentierung bei hierfür geeigneten Temperaturen, z.B. ca. 18°C über einen Zeitraum von ca. 24 Stunden.

Dieses gereifte, fermentierte Gemisch wird dann einer Hochdruckbehandlung unterzogen. Denkbar sind hier Druckbereiche von bis zu 6000 bar und darüber bei einer Haltezeit von im Wesentlichen 3 Minuten. Diese Hochdruckbehandlung führt dann zur gewünschten Eiweißkoagulation.

Nachdem die Hochdruckbehandlung vorgenommen wurde, werden die entsprechend behandelten Rohstoffe auf Endkörnung gebracht, und zwar gemäß den zu erreichenden Zielprodukten für Teewurst, grobe Teewurst, Zwiebelwurst, Braunschweiger etcetera. Es erfolgt in diesem Sinne eine Abfüllung in Därme, Becher oder andere geeignete Umhüllungen.

Wenn luftdurchlässige Därme wie bei Teewurst oder Braunschweiger zur Anwendung kommen, kann dann ein Räucherschritt realisiert werden.

Ausgestaltend werden die Fertigprodukte erneut mittels Hochdruck behandelt, um alle unerwünschten Einflüsse durch eine mögliche Rekontamination nach der ersten Hochdruckbehandlung auszuschließen.

Vorteil des beschriebenen Verfahrens ist neben der länger anhaltenden Streichfähigkeit des Fertigprodukts, die vollständige Inaktivierung von Mikroorganismen, wobei der pH-Wert über einen langen Zeitraum konstant bleibt.

Bei Rohwurstprodukten ist der pH- und der aw-Wert zu senken und eine Fermentierung vorzunehmen.

Gemäß einem weiteren Ausführungsbeispiel bei der Fertigung streichfähiger Wurst mit den Produkteigenschaften von Rohwurst wird ein möglichst magerfleischiges, d.h. ohne Speck versehenes Rohmaterial angesalzen.

Neben Nitritpökelsalz kann hier auch Kochsalz verwendet werden, da eventuell vorhandene Mikroorganismen durch die sich anschließende Hochdruckbehandlung zuverlässig inaktiviert werden.

Wenn notwendig, wird Zucker für die pH-Wertabsenkung durch Mikroorganismen hinzugefügt. Ebenfalls können Starterkulturen oder GDL zugegeben werden.

Selbstverständlich besteht die Möglichkeit, Gewürze in die Vormischung oder während der Endzerkleinerung hinzuzufügen.

Die Rohmaterialmischung wird dann grob vorzerkleinert und anschließend temperiert, so dass bei der Lagerung die Umrötung (nur bei Einsatz von Nitritpökelsalz) bzw. die Fermentierung und Absäuerung erfolgen können.

Falls keine wasseraufnehmenden Stoffe zur aw-Wertsenkung zugegeben werden, findet während der Lagerung in geeigneten Räumen die erforderliche Abtrockung statt.

Da die Umrötungs-, Fermentierungs- und pH-Wertsenkungsphase ausschließlich mit magerfleischhaltigem Rohmaterial erfolgt, ist der aw-Wert gegenüber der Gesamtmischung höher, was eine schnellere Reifung und pH-Wertsenkung unterstützt. Zusätzlich erleichtert der höhere Ausgangswassergehalt der Rohstoffe die notwendige Abtrocknung.

Das fermentierte und pH-wertgesenkte Rohmaterial wird mit oder ohne Zugabe der reinen Fettanteile dann hochdruckbehandelt, um eine Koagulation des Eiweißes und eine Inaktivierung von Mikroorganismen zu erreichen.

Diese Behandlung bewirkt, dass der pH-Wert unmittelbar leicht ansteigt, aber dann über einen längeren Zeitraum konstant bleibt und das Eiweiß koaguliert.

Durch diese Verfahrensschritte bleiben die einzelnen mechanisch getrennten Fleischteile während der weiteren Produktionsschritte und der Lagerung getrennt. Damit bleibt das Produkt sehr lange streichfähig.

Das später abzufüllende Produkt wird ein zweites Mal zur Inaktivierung von Mikroorganismen, die während des Produktionsvorgangs (Zerkleinern und Füllen) in das Brät gelangen, hochdruckbehandelt, wobei die Zugabe von Fett (Speck) erst während der Zerkleinerung auf Endkorngröße vorgenommen wird.

Die vorstehend erwähnte Vorgehensweise hat den Vorteil, dass die Zerkleinerung des Fettes gleichmäßiger ausfällt, da die Hochdruckbehandlung das Fett geschmeidig werden lässt.

Die auf Endkörnung zerkleinerten Rezepturbestandteile werden dann in vorgesehene Umhüllungen gefüllt.

Dabei bleibt selbst in einem wasserdurchlässigen Darm das Produkt lange streichfähig. Luft- und wasserundurchlässige Packungen, in die das zerkleinerte Material gefüllt wird, können zur Erhöhung der Produktsicherheit und Haltbarkeit ein weiteres ergänzendes Mal einer Hochdruckbehandlung unterzogen werden.

Die erfindungsgemäße Herstellung von streichfähiger Rohwurst und ähnlichen streichfähigen Produkten ergibt sich gemäß dem im Folgenden geschilderten Ausführungsbeispiel.

Grob zerkleinerte Rohstoffe zur Herstellung von streichfähiger Rohwurst müssen bei dem folgenden Ausführungsbeispiel in überraschender Weise nicht nach der pH-Wertabsenkung und vor der Zerkleinerung einer Hochdruckbehandlung unterzogen werden, da durch die Absäuerung mittels Starter-und/oder Schutzkulturen oder sogenannter GDL eine Eiweißdenaturierung eintritt. Dadurch wird nach der Zerkleinerung auf Endkorngrößen ein unerwünschtes Zusammenwachsen von Magerfleischanteilen verhindert.

Voraussetzung für diese Ausführungsform der Erfindung ist es, dass eine vollständige und gleichmäßige Denaturierung der Eiweiße vorliegt. Nach einer solchen Behandlung kann das auf Endkorngröße gebrachte Brät in die vorgesehene Umhüllung gefüllt und zur Stabilisierung, d.h. zur Inaktivierung von Mikroorganismen, mittels Hochdruck behandelt werden.

Durch eine geeignete Auswahl von Starter- und/oder Schutzkulturen kann zusätzlich der Grad der Streichfähigkeit der Fertigprodukte gezielt beeinflusst werden.

Das nachstehend geschilderte Beispiel belegt, dass der pH-Wert der nicht hochdruckbehandelten streichfähigen Würste weiter sinkt, während die hochdruckbehandelten Rohwürste pH-stabil bleiben.

Im Übrigen wird die Säuerung durch die Hochdruckbehandlung sensorisch als milder empfunden. Es ermöglicht also die erfindungsgemäße Lehre den Verzicht oder die Reduktion von Nitritpökelsalz, das konventionell zur Farbgebung und mikrobieller Sicherung der Halb- und Fertigprodukte eingesetzt wird. In alternativer Weise kann hier die Farbgebung z.B. durch Zugabe von Roter Beete erfolgen.

Durch die sehr zügige Absäuerung der Rohstoffmischung, die schnell folgende sichere Inaktivierung von Mikroorganismen und die Farbgebung durch Zugabe von natürlichen Stoffen ist es in überraschender Weise möglich, eine Rohwurst herzustellen, die alle gesundheitlich relevanten Bedingungen erfüllt.

### Herstellung Teewurst HPP

Leitsatzkennziffer 2.212.1,
BEFFE (fein zerkleinert): nicht unter 10%

**Rezeptur:**

| **Gewürze und Zutaten, Fleischmaterial** | **Standard** | **+5g/kg Guarkernmehl** | **+5g/kg Xanthan** |
|---|---|---|---|
| Starterkulturen dehydratisiert Firma Gewürzmüller | X | X | X |
| Dextrose | 5g/kg | 5g/kg | 5g/kg |
| Kochsalz (z. T. Räuchersalz) | 20g/kg | 20g/kg | 20g/kg |
| Rote Beete | 0,5g/kg | 0,5g/kg | 0,5g/kg |
| Gewürzmischung Teewurst | 5g/kg | 5g/kg | 5g/kg |
| Rindfleisch I | 0,75 kg | 0,75 kg | 0,75 kg |
| Schweinefleisch II | 2,25 kg | 2,25 kg | 2,25 kg |
| Schweinefleisch VIII (Fett) | 3 kg | 3 kg | 3 kg |
| **Gesamtmenge** | **6,000 kg** | **6,000 kg** | **6,000 kg** |

### Herstellungsverfahren:

Am Tag vor der Produktion S VIII grob wolfen und einfrieren.

Auch am Tag vorher S II und R I grob wolfen. Magerfleisch mit den jeweiligen Zutaten und Gewürzen + Starterkulturen vermischen. Bei 15-18°C in der Klimakammer bis auf einen pH-Wert von 5,2 - 5,4 absäuern lassen. Zum Schluss in der Klimakammer herunterkühlen. Fleisch auf 3 mm wolfen, Fett und Fleisch fein kuttern, in Därme füllen und mittels HPP behandeln.

### Realer Herstellungsablauf:

Am Tag vor der Produktion wurde das SVIII grob gewolft und eingefroren. Des Weiteren wurde SII und RI grob gewolft und in einer Kitchen Aid mit den jeweiligen Zutaten, Gewürzen (Salz anteilig) und rehydratisierten Starterkulturen vermengt. Dextrose wurde anteilig zu der in dem Gewürz enthaltenen Dextrose zugegeben. Die einzelnen Chargen kamen für die Absäuerung auf bis pH 5,2-5,4 in eine Klimakammer, in der eine Temperatur von 15-18°C voreingestellt war. Wie dem pH-Wertverlauf zu entnehmen ist, begann die Absäuerung der Masse (Magerfleisch) nach ca. 8 Stunden. Am nächsten Tag (12.02.) war die Magerfleischmasse, wie dargestellt, auf ca. pH 5,2 abgesäuert.

Das gefrorene, gewolfte Fett wurde anteilig mit dem abgesäuerten Magerfleisch und dem restlichen Salz feingekuttert und abgefüllt.

Die gefüllte Teewurst wurde 3 Minuten bei 6000 bar gedrückt.

Am 11.02. wurden 1,5g rehydratisierte Starterkulturen zugegeben und 3min gemengt.

**pH-Wert Entwicklung des Magerfleisches:**

| **1,5g Starterkulturen auf 3kg Magerfleisch** | **Standard** | **Guarkernmehl (0,5%)** | **Xanthan (0,5%)** |
|---|---|---|---|
| 11.02. 8 Uhr (Magerfleisch) | 5,7 | 5,75 | 5,73 |
| 11.02. 16.00 Uhr (Magerfleisch) | 5,55 | 5,62 | 5,62 |
| 12.02. 7.30 Uhr (Magerfleisch) | 5,47 | 5,21 | 5,23 |
| 12.02. 10.30 Uhr (Magerfleisch) | 5,21 | 5,18 | 5,23 |
| 15.02. 8.00 Uhr (Magerfleisch + Fett / fertige, hochdruckbehandelte Teewurst) | 5,52 | 5,53 | 5,57 |
| 17.02.10 Teewurst gedrückt/ungedrückt | 5,51/5,21 | 5,52/5,19 | 5,53/5,22 |

Die auch in Versuchen mit weiteren Fleischarten erzielten Untersuchungsergebnisse belegen, dass durch die Hochdruckbehandlung Wasser überraschend besser gebunden wird und daraus eine höhere Saftigkeit der fertigen Lebensmittel resultiert. Die höhere Wasserbindungsfähigkeit lässt das Produktvolumen während der Hitzebehandlung geringer schrumpfen, was beim Verzehr von derart behandeltem Fleisch dazu führt, dass die hochdruckbehandelten Waren vom Verbraucher als zarter gegenüber Normalware ohne Hochdruckbehandlung empfunden werden.

Die erhöhte Wasserbindefähigkeit nach einer Hochdruckbehandlung kommt überraschend auch dadurch zum Ausdruck, dass ungeschützte Anschnitte von Leberwurst oder auch streichfähiger Rohwurst während der Lagerung deutlich geringer austrocknen als Waren, die nach dem Stand der Technik produziert wurden.

Weiterhin wurde in sehr überraschender Weise bei allen hochdruckbehandelten Produkten festgestellt, dass die Salzintensität deutlich stärker zu empfinden ist als bei Produkten, die nach üblicher Produktionsmethode hergestellt werden. Versuche haben ergeben, dass die Salzeinwaage zu den Rezepturen deutlich, d.h. um ca. 10% reduziert werden kann, was wiederum der angestrebten Verträglichkeit der Produkte dient.

## Patentansprüche

1. Verfahren zur Steuerung der Produkteigenschaften bei der Herstellung von Lebensmitteln, die der Produktgruppe Rohwurst zuzurechnen sind, insbesondere zum Erhalt der Streich- oder Schnittfähigkeit,
**dadurch gekennzeichnet, dass**
bei der Herstellung von Rohwurst übliche Ausgangsmaterialien, allerdings im nicht tiefgekühlten Zustand, angesalzt, vermischt und grob vorzerkleinert werden und diese Mischung einer Fermentierung und Absäuerung, d.h. pH-Wertsenkung unterzogen wird,
anschließend eine Hochdruckbehandlung zur Eiweißkoagulation und Inaktivierung von Mikroorganismen vorgenommen wird, wobei die mechanisch getrennten Fleischrohstoffe in ihrer Trennung erhalten bleiben, wobei nach dem Hochdruckbehandlungsschritt eine Feinzerkleinerung erfolgt und während der Zerkleinerung auf Endkorngröße eine Zugabe von Fett erfolgt und im Anschluss daran eine zweite Hochdruckbehandlung am abgefüllten Produkt vorgenommen wird und wobei in Abhängigkeit von der Ausführung und Intensität der Hochdruckbehandlung der Salzanteil im Produkt reduziert wird, indem die Salzeinwaage im Vergleich zu den Rezepturen, die nach üblicher Produktionsmethode hergestellt werden, um ca. 10 % reduziert wird.

2. Verfahren nach Anspruch 1,
**dadurch gekennzeichnet, dass**
zur verstärkten Wahrnehmung sensorisch aktivierter Substanzen eine ergänzende Hochdruckbehandlung am Halbfertigkprodukt, Fertigprodukt oder an Ausgangs- oder geschmacklich relevanten Zusatzstoffen vorgenommen wird.

## Claims

1. A method for controlling the product features during the production of foodstuffs attributable to the product group of raw sausage, in particular for obtaining the spreading or cutting property, **characterized in that** for the production of raw sausage the usual starting materials, not in the frozen state, are salted, mixed and coarsely pre-chopped, and said mixture is subjected to fermentation and acidification, i.e. a reduction in the pH value, followed by high-pressure treatment for the coagulation of protein and inactivation of microorganisms, wherein the mechanically separated raw meat materials remain separated, wherein fine comminution occurs after the high-pressure treatment step, and fat is added during the comminution to final grain size and subsequently a second high-pressure treatment is carried out on the filled product, and wherein depending on the performance and intensity of the high-pressure treatment the fraction of salt in the product is reduced, **in that** the salt content is reduced by approximately 10% in comparison with recipes which are produced according to conventional production methods.

2. A method according to claim 1, **characterized in that** for intensified perception of sensory activated substances an additional high-pressure treatment is carried out on the semi-finished product, finished product or starting materials or additives that are relevant for the taste.

## Revendications

1. Procédé pour moduler les propriétés des produits lors de la fabrication de produits alimentaires parmi lesquels compte le groupe de produits constitués par les chairs à saucisse crues, en particulier pour obtenir une tartinabilité ou facilité de coupe,
**caractérisé en ce que**
lors de la fabrication de chairs à saucisse crues, des matériaux de départ habituels, qui ne sont en fait pas à l'état congelé, sont salés, mélangés et préalablement broyés de façon grossière et ce mélange est soumis à une fermentation et à une désacidification, c'est-à-dire à un abaissement du pH,
on procède ensuite à un traitement sous haute pression pour la coagulation des protéines et l'inactivation de micro-organismes, dans lequel les matériaux carnés séparés mécaniquement restent maintenus dans leur séparation, dans lequel après l'étape de traitement sous haute pression, on procède à un broyage fin et pendant le broyage à la taille finale on procède à une addition de matières grasses et à la suite de celle-ci on procède à un second traitement sous haute pression sur le produit rempli et ici, en fonction de l'exécution et de l'intensité du traitement sous haute pression, la part de sel dans le produit est réduite en réduisant l'apport de sel, par comparaison aux recettes produites selon les méthodes de production habituelles, d'environ 10 %.

2. Procédé selon la revendication 1,
**caractérisé en ce que** pour renforcer la perception des substances actives sur le plan sensoriel on procède à un traitement sous pression complémentaire sur le produit semi-fini, sur le produit fini ou sur des produits de départ ou encore sur des additifs pertinents sur le plan gustatif.
